# EUROPÄISCHE PATENTSCHRIFT

(11) **EP 1 647 959 B1**
(45) Veröffentlichungstag und Bekanntmachung des Hinweises auf die Patenterteilung: **11.10.2006**
(21) Anmeldenummer: 04026348.5
(22) Anmeldetag: 05.11.2004
(51) Int. Cl.: G08G 1/042, G01V 3/08, G08G 1/015

(54) **Vorrichtung zur Fahrzeugerfassung**
Vehicle detection system
Dispositif de détection de véhicules

(30) Priorität: 16.10.2004 EP 04024715
(43) Veröffentlichungstag der Anmeldung: 19.04.2006
(73) Patentinhaber: SkiData AG, 5083 Gartenau (AT)
(72) Erfinder: Ponert, Gregor, 5020 Salzburg (AT)
(74) Vertreter: Haft, von Puttkamer, Berngruber, Czybulka

(56) Entgegenhaltungen:
- EP-A- 0 049 949
- DE-A- 10 123 223
- US-A- 2 201 146
- US-A- 3 587 012
- US-B1- 6 724 191
- CARUSO M J ET AL: "Vehicle detection and compass applications using AMR magnetic sensors" PROCEEDINGS SENSORS EXPO BALTIMORE HELMERS PUBLISHING PETERBOROUGH, NH, USA, 1999, Seiten 477-489, XP002312924 BALTIMORE

## Beschreibung

Die Erfindung bezieht sich auf eine Vorrichtung zur Erfassung von Fahrzeugen mit einem Magnetfeldsensor nach dem Oberbegriff des Anspruchs 1. Sie hat auch mehrere Verwendungen dieser Vorrichtung zum Gegenstand.

Zur Erfassung von Fahrzeugen, beispielsweise vor einer Parkschranke, werden heutzutage üblicherweise in den Fahrbahnboden Induktionsschleifen verlegt. Dazu muss die Fahrbahn für die Induktionsschleife und deren Zuleitungen aufgeschnitten und nach dem Verlegen wieder vergossen werden. Abgesehen von ihrer außerordentlich kostenintensiven Verlegung sind Induktionsschleifen anfällig gegen Beschädigung, beispielsweise bei Erschütterungen oder wenn durch Risse Flüssigkeit in den Fahrbahnboden eintritt. Ferner wird ihr Einsatz durch Umwelteinflüsse wie Regen oder Temperaturschwankungen erschwert. Auch örtliche Gegebenheiten, wie z. B. Stahlbeton in der Fahrbahn haben negative Einflüsse auf eine zuverlässige Funktion.

Es ist daher vorgeschlagen worden, anstelle der Induktionsschleifen Erdmagnetfeldsensoren zur Fahrzeugerfassung zu verwenden (EP 1193662 A1, DE 102 16 760 A1, deutsche Patentanmeldung 103 21 201.0).

Durch die kugelförmige Detektionscharakteristik des Erdmagnetfeldsensors werden jedoch auch Fahrzeuge detektiert, die sich auf einer Nachbarspur befinden, beispielsweise bei einer Parkschranke Fahrzeuge auf der Nachbarspur hinter der Parksäule. Es ist nicht möglich, auf einfache Weise der Detektionscharakteristik des Erdmagnetfeldsensors eine Richtwirkung zu geben, sodass nur Fahrzeuge, die sich auf der Spur vor der Parksäule befinden, detektiert werden. Dies geht auch dann nicht, wenn der Erdmagnetfeldsensor näher an der Fahrspur vor der Parksäule angeordnet wird, jedenfalls dann nicht, wenn sich auf der Nachbarspur hinter der Parksäule ein großes, schweres Fahrzeug befindet.

Nach DE 101 23 223 A wird zur Erfassung von Fahrzeugen ein Magnetfeldsensor verwendet, der Veränderungen des Gesamtmagnetfeldes aus Erdmagnetfeld und überlagerten statischen und dynamischen Hintergrundfeldern detektiert. Der Magnetfeldsensor kann in einem Hohlraum in der Fahrbahn angeordnet sein. Zur Festlegung eines bestimmten Arbeitspunktes wird er mit einem Permanentmagnetfeld beaufschlagt.

Aufgabe der Erfindung ist es, Fahrzeuge auf einer Fahrspur mit einem einfach aufgebauten Magnetfeldsensor zuverlässig zu erfassen.

Dies wird erfindungsgemäß mit der im Anspruch 1 gekennzeichneten Vorrichtung erreicht. In den Ansprüchen 2 bis 4 sind vorteilhafte Ausgestaltungen der erfindungsgemäßen Vorrichtung wiedergegeben. Die Ansprüche 5 bis 8 haben bevorzugte Verwendungsmöglichkeiten der erfindungsgemäßen Vorrichtung zum Gegenstand.

Nach der Erfindung wird wenigstens ein Permanentmagnet in die Fahrbahn eingebracht und zwar in einem Abstand von dem Magnetfeldsensor, dass das Magnetfeld des Permanentmagneten am Magnetfeldsensor messbar stärker ist als das Erdmagnetfeld. Das heißt, erfindungsgemäß überlagert das Magnetfeld des Permanentmagneten an dem Magnetfeldsensor derart das Erdmagnetfeld, dass sich Beeinflussungen des Permanentmagneten stärker auswirken als Änderungen des Erdmagnetfeldes.

Damit kann mit dem neben der Fahrspur angeordneten Magnetfeldsensor ein Fahrzeug zuverlässig detektiert werden, also beispielsweise bei einer Parkschranke ein Fahrzeug auf der vor der Parksäule befindlichen Fahrspur. Fahrzeuge, die sich hinter der Parksäule befinden, sind hingegen so weit vom Permanentmagneten entfernt, dass sie das Magnetfeld des Permanentmagneten nicht beeinflussen können, auch nicht wenn sie groß und schwer sind.

Als Permanentmagnet wird vorzugsweise ein Stabmagnet, also ein Magnet mit einer größeren Länge als sein Durchmesser verwendet, beispielsweise mit einem Durchmesser von 5 bis 20 mm, vorzugsweise weniger als 10 mm und einer Länge von 10 bis 50 mm. Zum Einbringen des Stabmagnet in die Fahrbahn braucht mit einer Bohrmaschine lediglich in die Fahrbahn eine kleine Bohrung gebohrt zu werden, die nach dem Einbringen des Magneten wieder verschlossen wird.

Der Abstand des Permanentmagneten vom Magnetfeldsensor kann beispielsweise 30 bis 100 cm betragen. Um die Reichweite des Magnetfeldsensors zu erhöhen, ohne die Größe des Permanentmagneten erhöhen zu müssen, können quer zur Fahrbahn im Abstand von dem einen, ersten Permanentmagneten einer oder mehrere weitere Permanentmagneten in die Fahrbahn eingebracht werden. Der Abstand des weiteren Permanentmagneten von dem einen, ersten Permanentmagneten, der dem Magnetfeldsensor benachbart ist, wird derart gewählt, dass eine Änderung des Magnetfeldes des weiteren Permanentmagneten durch das Magnetfeld des ersten Permanentmagneten auf den Magnetfeldsensor übertragen wird. Durch zwei oder mehrere derart hintereinander gekoppelte Permanentmagnete detektiert der Magnetfeldsensor Veränderungen des Magnetfelds aller verketteten Permanentmagnete. Bei zwei derart verketteten Permanentmagneten kann so die Reichweite des Magnetfeldsensors beispielsweise auf 80 bis 150 cm erhöht werden, ohne dass dadurch die Sensibilität des Magnetfeldsensors in die Gegenrichtung, also bei einer Parksäule für Fahrzeuge auf der Nachbarspur hinter der Parksäule zunimmt.

Als Magnetfeldsensor kann ein einfach aufgebauter Magnetfeldsensor zur Detektion des Erdmagnetfelds verwendet werden, beispielsweise ein Fluxgate-Magnetfeldsensor. Das heißt, der Magnetfeldsensor sollte die Sensitivität eines Erdmagnetfeldsensors besitzen.

Die erfindungsgemäße Vorrichtung kann insbesondere bei Parkkontrollanlagen eingesetzt werden, bei denen eine Parkschranke an einer Fahrbahn mit wenigstens einer Fahrspur und einer der Parkschranke in Fahrtrichtung vorgeordnete Parksäule vorgesehen ist. Dabei wird ein Parkticket oder dergleichen Datenträger verwendet, auf den die Berechtigung nach Bezahlen der Parkgebühr aufgezeichnet oder der mit einer Dauerberechtigung versehen ist. Nach dem Lesen des Datenträgers steuert bei aufgezeichneter Berechtigung und einem von dem Magnetfeldsensor an der Parksäule erfassten Fahrzeug eine Leseeinrichtung für den Datenträger den Antrieb der Parkschranke an, um sie zu öffnen. Ein weiterer Magnetfeldsensor ist an der Parkschranke vorgesehen, um ein Fahrzeug unter der Parkschranke zu erfassen, d. h. zu verhindern, dass sich die Schranke schließt, wenn sich darunter ein Fahrzeug befindet.

Der der Parksäule zugeordnete Magnetfeldsensor befindet sich vorzugsweise an oder im Innern der Parksäule. Der der Parkschranke zugeordnete Magnetfeldsensor befindet sich vorzugsweise an oder im Innern des Schrankenfußes der Parkschranke oder an oder im Innern des Sperrbalkens der Parkschranke. Die Magnetfeldsensoren können damit werkseitig installiert werden. Die erfindungsgemäße Vorrichtung ist deshalb mit geringen Installationskosten vor Ort verbunden und in kürzester Zeit als "Plug And Play"-System betriebsbereit. Die im Innern der Parksäule bzw. des Schrankenfußes oder der Parkschranke angeordneten Magnetfeldsensoren können mit einer Blende aus Kunststoff oder dergleichen nicht ferromagnetischen Material abgedeckt und damit von außen nicht sichtbar sein.

Die Erfindung ist jedoch nicht auf die Betätigung einer Schranke beschränkt. Beispielsweise kann anstelle der Schranke auch ein Tor vorgesehen sein, beispielsweise ein Garagentor.

Die erfindungsgemäße Vorrichtung kann auch zum Zählen von Fahrzeugen eingesetzt werden. So kann sie beispielsweise in einem Parkhaus oder dergleichen Parkzone an Stellen, an denen sich die Fahrspur verzweigt, installiert werden, um mit ihr die Fahrzeuge zu erfassen, die an der Verzweigung in die eine oder andere Richtung fahren. Damit kann in einem Parkhaus angezeigt werden, dass man z. B. beim Abbiegen nach rechts noch auf so und soviel leere Parkplätze trifft, während bei Geradeausfahrt oder beim Abbiegen nach links keine Parkplätze mehr zur Verfügung stehen.

Ferner ist die erfindungsgemäße Vorrichtung zur Stellplatzüberwachung geeignet. Das heißt, mit dem Magnetfeldsensor kann festgestellt werden, ob ein bestimmter Fahrzeugstellplatz frei oder besetzt ist. Dabei kann es sich um Stellplätze in einem Parkhaus oder dergleichen Parkzone handeln oder um Stellplätze an Straßen oder dergleichen öffentlichen Plätzen. So kann beispielsweise bei gebührenpflichtigen Stellplätzen an einer Straße oder dergleichen öffentlichen Platz mit der erfindungsgemäßen Vorrichtung einer Kontrollperson angezeigt werden, wenn ein freier Stellplatz besetzt wird, sodass die Kontrollperson den entsprechenden Stellplatz aufsuchen und die Bezahlung der Parkgebühr überprüfen kann.

Wenn die erfindungsgemäße Vorrichtung zum Zählen von Fahrzeugen oder zur Stellplatzüberwachung verwendet wird, kann der Magnetfeldsensor beispielsweise in einem Pfosten neben der Fahrbahn oder am Gehsteig am Fahrbahnrand angeordnet sein.

Mit der erfindungsgemäßen Vorrichtung sind jedoch nicht nur Kraftfahrzeuge und andere Straßenfahrzeuge im engeren Sinne erfassbar, sondern beispielsweise auch Rollstühle und Kinderwagen. Eine bevorzugte Verwendung der erfindungsgemäßen Vorrichtung besteht daher darin, an Drehsperren Rollstühle und/oder Kinderwagen zu erfassen. So kann bei angetriebenen Drehsperren beispielsweise die Drehgeschwindigkeit reduziert werden, wenn mit der erfindungsgemäßen Vorrichtung ein Rollstuhl oder im Kinderwagen detektiert wird.

Nachstehend ist eine Ausführungsform der erfindungsgemäßen Vorrichtung anhand der Zeichnung beispielhaft näher erläutert. Darin zeigen:
Figur 1 in perspektivischer Wiedergabe die Ausfahrt einer Parkgarage; und
Figur 2 eine Draufsicht auf die Ausfahrt von oben.

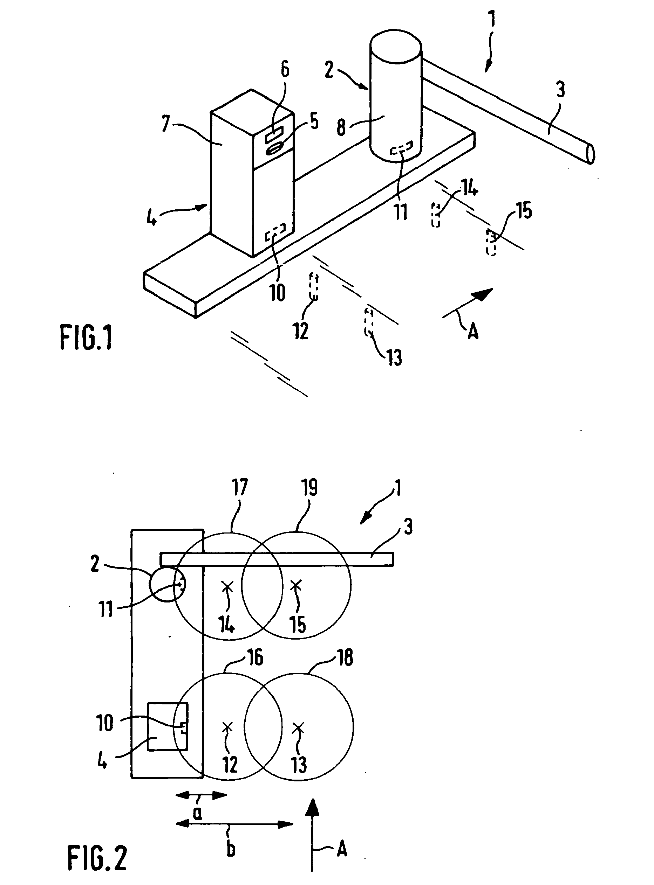

Gemäß Figur 1 sind neben der Fahrspur A an der Ausfahrt einer Parkgarage auf einer Insel eine Parkschranke 1 mit einem Schrankenfuß 2 und einem Sperrbalken 3 sowie in Fahrtrichtung vor der Schranke 1 eine Parksäule 4 vorgesehen. Die Parksäule 4 weist ein Kartenmaul 5 und ein Display 6 auf. Beim Verlassen der Parkgarage wird das Parkticket in das Kartenmaul 5 gesteckt, auf das z. B. auf einem Magnetstreifen oder in anderer Weise bei Bezahlung an einer Kassa oder einem Automaten eine Berechtigung zum Verlassen der Parkgarage aufgezeichnet worden ist.

In dem Gehäuse 7 der Parksäule 4 und in dem Gehäuse 8 des Schrankenfußes 2 ist jeweils im unteren Bereich an der Fahrbahn A ein gestrichelt dargestellter Magnetfeldsensor 10 bzw. 11 einschließlich Auswerteelektronik angeordnet. Das Gehäuse 7 der Parksäule 4 und das Gehäuse 8 des Schrankenfußes 2 bestehen zumindest im Bereich der Magnetfeldsensoren 10 und 11 aus einem nicht ferromagnetischem Material, beispielsweise Kunststoff oder einem Aluminiumwerkstoff.

In die Fahrspur A sind in einem Abstand a von dem Magnetfeldsensor 10 bzw. 11 erste stabförmige Permanentmagneten 12 und 14 und im Abstand b zweite stabförmige Permanentmagnete 13 und 15 eingelassen. Die Permanentmagnete 12 bis 15 können einen Durchmesser von beispielsweise 8 mm und eine Länge von beispielsweise 25 mm aufweisen. Der Abstand a kann beispielsweise 50 bis 60 cm betragen, der Abstand b 100 bis 120 cm. Die Stabmagneten 12 bis 15 sind in Figur 1 sichtbar dargestellt. Tatsächlich befinden sie sich jedoch in Bohrungen in der Fahrbahn, sind also nicht sichtbar.

In Figur 2 ist mit den Kreisen 16 bis 19 jeweils der Bereich angegeben, in dem die Permanentmagneten 12 bis 15 eine größere Feldstärke besitzen als das Erdmagnetfeld. Das heißt, der Abstand a ist kleiner als der Radius der Kreise 16 und 17, die die Stärke der Permanentmagneten 12 und 14 wiedergeben und der Abstand b kleiner als die Summe der Radien der Kreise 16 und 18 bzw. 17 und 19. Dadurch entsteht eine sich quer über die Fahrbahn A erstreckende Verkettung der Magnetfelder 16 und 18 bzw. 17 und 19. Das heißt, eine Änderung des Magnetfeldes 18 bzw. 19 des weiteren Permanentmagneten 13 bzw. 15 wird durch das Magnetfeld 16 bzw. 17 des ersten Permanentmagneten 12, 14 auf den Magnetfeldsensor 10 bzw. 11 übertragen, sodass die Detektionsreichweite der Sensoren 10 und 11 dem Abstand b entspricht.

## Patentansprüche

1. Vorrichtung zur Erfassung von Fahrzeugen mit einem Magnetfeldsensor (10, 11) neben der Fahrbahn (A), **gekennzeichnet durch** einen Permanentmagnet (12, 14), der in einem solchen Abstand (a) von dem Magnetfeldsensor (10, 11) in der Fahrbahn (A) angebracht ist, dass das mit dem Magnetfeldsensor messbare Magnetfeld des Permanentmagneten (12, 14) stärker ist als das Erdmagnetfeld, so dass sich Beeinflussungen des Permanentmagneten (12, 14) **durch** ein Fahrzeug stärker auf den Magnetfeldsensor (10, 11) auswirken als Änderungen des Erdmagnetfeldes.

2. Vorrichtung nach Anspruch 1, **dadurch gekennzeichnet, dass** wenigstens ein weiterer Permanentmagnet (13, 15) in einem solchen Abstand von dem einen, ersten Permanentmagneten (12, 14) in die Fahrbahn (A) eingebracht ist, dass eine Änderung des Magnetfeldes (18, 19) des weiteren Permanentmagneten (13, 15) durch das Magnetfeld (16, 17) des ersten Permanentmagneten (12, 14) auf den Magnetfeldsensor (10, 11) übertragbar ist.

3. Vorrichtung nach Anspruch 1 oder 2, **dadurch gekennzeichnet, dass** der Magnetfeldsensor (10, 11) ein zur Detektion des Erdmagnetfeldes einsetzbarer Magnetfeldsensor ist.

4. Vorrichtung nach einem der vorstehenden Ansprüche, **dadurch gekennzeichnet, dass** der Permanentmagnet (12 bis 15) ein Stabmagnet ist.

5. Verwendung der Vorrichtung nach einem der vorstehenden Ansprüche für eine Anlage zur Kontrolle von Fahrzeugen mit mindestens einer Parkschranke (1) an einer Fahrbahn (A) und einer der Parkschranke (1) in Fahrtrichtung vorgeordneten Parksäule (4).

6. Verwendung der Vorrichtung nach einem der Ansprüche 1 bis 4 zum Zählen von Fahrzeugen.

7. Verwendung der Vorrichtung nach einem der Ansprüche 1 bis 4 zur Fahrzeugstellplatzüberwachung.

8. Verwendung der Vorrichtung nach einem der vorstehenden Ansprüche 1 bis 4 zur Erfassung von Rollstühlen und Kinderwagen an einer Drehsperre.

## Claims

1. An apparatus for detecting vehicles with a magnetic field sensor (10, 11) beside the road (A), **characterized by** a permanent magnet (12, 14) mounted in the road (A) at a distance (a) from the magnetic field sensor (10, 11) such that the magnetic field of the permanent magnet (12, 14) that is measurable with the magnetic field sensor is stronger than the geomagnetic field, so that influences on the permanent magnet (12, 14) by a vehicle have a stronger effect on the magnetic field sensor (10, 11) than changes in the geomagnetic field.

2. The apparatus according to claim 1, **characterized in that** at least one further permanent magnet (13, 15) is incorporated into the road (A) at a distance from the one, first permanent magnet (12, 14) such that a change of the magnetic field (18, 19) of the further permanent magnet (13, 15) is transferable to the magnetic field sensor (10, 11) by the magnetic field (16, 17) of the first permanent magnet (12, 14).

3. The apparatus according to claim 1 or 2, **characterized in that** the magnetic field sensor (10, 11) is a magnetic field sensor usable for detecting the geomagnetic field.

4. The apparatus according to any of the above claims, **characterized in that** the permanent magnet (12 to 15) is a bar magnet.

5. Use of the apparatus according to any of the above claims for a vehicle control system having at least one barrier (1) on a road (A) and a parking post (4) disposed before the barrier (1) in the driving direction.

6. Use of the apparatus according to any of claims 1 to 4 for counting vehicles.

7. Use of the apparatus according to any of claims 1 to 4 for monitoring parking spaces.

8. Use of the apparatus according to any of the above claims 1 to 4 for detecting wheelchairs and baby carriages at a rotating barrier.

## Revendications

1. Dispositif de détection de véhicules à l'aide d'un capteur de champ magnétique (10, 11) à côté de la voie de circulation (A), **caractérisé par** un aimant permanent (12, 14) qui est monté dans la voie de circulation (A) à une distance (a) telle du capteur de champ magnétique (10, 11) que le champ magnétique de l'aimant permanent (12, 14), qui peut être mesuré au moyen du capteur de champ magnétique est plus fort que le champ géomagnétique, de telle sorte que des influences de l'aimant permanent (12, 14) par un véhicule se répercutent plus fortement sur le capteur de champ magnétique (10, 11) que des variations du champ géomagnétique.

2. Dispositif selon la revendication 1, **caractérisé en ce qu'**au moins un autre aimant permanent (13, 15) est monté dans la voie de circulation (A) à une distance telle par rapport audit premier aimant permanent (12, 14) qu'une modification du champ magnétique (18, 19) de l'autre aimant permanent (13, 15) par le champ magnétique (16, 17) du premier aimant permanent (12, 14) est transmissible au capteur de champ magnétique (10, 11).

3. Dispositif selon la revendication 1 ou 2, **caractérisé en ce que** le capteur de champ magnétique (10, 11) est un capteur de champ magnétique qui peut être utilisé pour détecter le champ géomagnétique.

4. Dispositif selon l'une des revendications précédentes, **caractérisé en ce que** l'aimant magnétique (12 à 15) est un barreau magnétique.

5. Utilisation du dispositif selon l'une des revendications précédentes pour une installation de contrôle de véhicules, comportant au moins une barrière de parking (1) sur une voie de circulation (A) et un poteau de parking (4) agencé en amont dans le sens de la marche.

6. Utilisation du dispositif selon l'une des revendications 1 à 4 pour compter des véhicules.

7. Utilisation du dispositif selon l'une des revendications 1 à 4 pour surveiller des places de parking pour véhicules.

8. Utilisation du dispositif selon l'une des revendications 1 à 4, pour détecter des fauteuils roulants ou des voitures d'enfants au niveau d'un tourniquet.
